Europäisches Patentamt

European Patent Office

Office européen des brevets

(11) Veröffentlichungsnummer: **0 104 433**
**A1**

(12) **EUROPÄISCHE PATENTANMELDUNG**

(21) Anmeldenummer: 83108315.9

(51) Int. Cl.³: **C 08 L 27/06**

(22) Anmeldetag: 24.08.83

(30) Priorität: 27.08.82 DE 3231906

(43) Veröffentlichungstag der Anmeldung:
04.04.84 Patentblatt 84/14

(84) Benannte Vertragsstaaten:
BE DE FR GB IT NL

(71) Anmelder: HOECHST AKTIENGESELLSCHAFT
Postfach 80 03 20
D-6230 Frankfurt am Main 80(DE)

(72) Erfinder: Notzon, Heinz
Lena-Christ-Strasse 17
D-8262 Altötting(DE)

(72) Erfinder: Engelmann, Manfred, Dr.
Baaderstrasse 2A
D-8263 Burghausen(DE)

(72) Erfinder: Plewan, Otto
Bischof-Sailer-Strasse 15
D-8262 Neuötting(DE)

(72) Erfinder: Jauss, Erich
Heubergweg 1
D-8269 Burgkirchen(DE)

(54) Formmasse für die Extrusion von Hohlkörpern und Profilen mit seidenmatter Oberfläche.

(57) Es wird eine Formmasse auf der Basis von Vinylchlorid-Polymerisaten und für deren Extrusionsverarbeitung üblichen Additiven beschrieben, die im wesentlichen aus A) 5 bis 50 Gew.-% eines hochmolekularen Vinylchlorid-Polymerisats mit einem K-Wert, bestimmt an seinem löslichen Anteil, von >90, welches seinerseits in einem Anteil von 0 bis 60 Gew.-%, bezogen auf Gesamtmenge A), ein vernetztes, unlösliches Vinylchlorid-Polymerisat enthält, und B) 95 bis 50 Gew.-% eines Vinylchlorid-Polymerisats mit einem K-Wert von 55 bis 65 besteht. Sie ist insbesondere geeignet für die Herstellung von Flaschen und anderen Hohlkörpern mit einer seidenmatten polyolefinähnlichen Oberflächenstruktur.

EP 0 104 433 A1

0104433

HOECHST AKTIENGESELLSCHAFT     HOE 82/F 917    Dr.SC-ba


Formmasse für die Extrusion von Hohlkörpern und
Profilen mit seidenmatter Oberfläche

Die Erfindung betrifft eine Formmasse auf der Basis von
Vinylchlorid-Polymerisaten und für deren Extrusionsverarbeitung üblichen Additiven, die für die Extrusion von
Hohlkörpern und Profilen unter Erzielung eines seidenmatten Oberflächeneffekts geeignet ist.

Es sind bereits eine Reihe von Wegen bekannt, um bei
Formkörpern aus Vinylchlorid-Polymerisaten zu matten
Oberflächen zu gelangen. So ist es dem Fachmann geläufig, bei der Verformung Schritte einzuschalten, die
der mechanischen Erzeugung von rauhen und matten Oberflächen dienen, wie zum Beispiel Prägeverfahren oder
das Kalandrieren über bestimmte, eine Oberflächenrauhigkeit erzeugende Kalanderwalzen. Solche Verfahren bedingen einen zusätzlichen mechanischen und verfahrenstechnischen Aufwand, sie sind außerdem für die Erzeugung
von Hohlkörpern nicht anwendbar.

Daher hat man auch bereits versucht, die Rezepturen von
Formmassen so zu gestalten, daß bei ihren Verformungsoperationen rauhe und/oder matte Oberflächen resultieren.
So kann man anorganische Zusätze wie Kreide, Silicate,
Glasfasern oder kleine Glaskügelchen einarbeiten und auf
diese Weise Mattierungseffekte erzielen. Derartige Zusätze
sind beispielsweise beschrieben in der DE-OS 23 59 060
und der DE-OS 28 44 687. Solche Zusätze von anorganischen
Mattierungsmitteln haben eine nachteilige Veränderung der physikalischen Eigenschaften der daraus hergestellten Formkörper zur Folge, auch werden die Verarbeitungseigenschaften von so behandelten Formmassen unerwünscht verschlechtert, was sich beispielsweise durch vergrößerten Abrieb der formgebenden Werkzeuge oder durch Belagsbildung bemerkbar machen kann. Der ebenfalls bekannte Zusatz von bestimmten Acrylpolymeren hat zwar keinen negativen Einfluß auf die Verarbeitbarkeit, jedoch verteuert er die Formmasse erheblich und seine Wirksamkeit bezüglich des Mattierungseffektes ist sehr begrenzt. Eine gewünschte polyolefinähnlich strukturierte, seidenmatte Oberfläche bei Hart-Polyvinylchlorid-Formteilen ist auf diese Weise nicht erzielbar.

Schließlich ist es bekannt, daß bei Formmassen auf der Basis von Polymerisaten des Vinylchlorids Mattierungseffekte dadurch erreicht werden können, daß man Homo- oder Copolymerisate unterschiedlichen Molekulargewichts im Gemisch verwendet.

In der DE-OS 27 16 853 wird eine Formmasse beschrieben, die aus einer Mischung von zwei Anteilen von Vinylchlorid-Polymerisat mit unterschiedlichen gewichtsmittleren Molekulargewichten besteht und die bei Rollknet-Kalandrierung zu Folien mit matter und rauher Oberfläche führt. Durch Extrusion hergestellte Formkörper aus solchen Formmassen weisen jedoch nicht den gewünschten "Seidenmatt"-Effekt auf, sondern ihre Oberfläche ist mehr oder minder glänzend rauh. Soweit die dort beschriebenen Formmassen auf durch Emulsionspolymerisation hergestelltem Polyvinylchlorid basieren, sind sie für die Extrusion zu Hohlkörpern überhaupt ungeeignet.

Aus der DE-OS 25 20 229 ist ein Verfahren zur Herstellung von Formkörpern mit einem "Frost- und Eiseffekt" bekannt, nach dem unter anderem ein weichmacherfreies oder weichmacherarmes, nach der Methode der Suspensionspolymerisation hergestelltes Polyvinylchlorid (Homopolymerisat)
mit einem K-Wert von 55 bis 65 eingesetzt wird, dem je
100 Gewichtsteile 3 bis 30 Gewichtsteile eines pulverförmigen Suspensions-Polyvinylchlorids (Homopolymerisat)
beigemischt sind, wobei letzteres einen K-Wert von über
65 besitzen soll, wobei ferner dieser K-Wert um 10
oder vorzugsweise um mehr als 10 Punkte höher liegen
soll als der des Basispolymeren. Der Verbesserung
dieses "Frost- oder Eiseffekts" soll der Zusatz von
Treibmitteln und/oder Talkum dienen. Es zeigt sich jedoch, daß bei Weglassung der letztgenannten Rezepturbestandteile ein nennenswerter Mattierungseffekt nur
durch Verwendung von sandgestrahlten Formen zum Aufrauhen der Hohlkörper bewerkstelligt werden kann. Ohne
diese Maßnahme bleiben die extrudierten Hohlkörper glänzend.

Der vorliegenden Erfindung liegt die Aufgabe zugrunde,
eine Formmasse zu schaffen, die bei der Extrusion zu
Hohlkörpern und      Profilen mit seidenmatter, nicht
glänzender Oberfläche und polyolefinähnlichem Griff
führt, ohne daß dazu besondere verfahrenstechnische
Maßnahmen erforderlich sind. Dabei sollen die mechanischen Eigenschaften solcher Extrudate zumindest nicht
verschlechtert, möglichst aber verbessert werden, wie
insbesondere die Fallfestigkeit von Hohlkörpern.

Die Lösung dieser Aufgabe liegt erfindungsgemäß in
einer Formmasse für die Extrusion von Hohlkörpern und
Profilen mit seidenmatter Oberfläche auf der Basis von
Vinylchlorid-Polymerisaten und für deren Extrusionsverarbeitung üblichen Additiven, dadurch gekennzeichnet,
daß das Vinylchlorid-Polymerisat im wesentlichen aus

A) 5 bis 50 Gew.-% eines hochmolekularen Vinylchlorid-Polymerisates mit einem K-Wert, bestimmt an seinem löslichen Anteil, von >90, welches seinerseits in einem Anteil von 0 bis 60 Gew.-%, bezogen auf die Gesamtmenge A), ein vernetztes, unlösliches Vinylchlorid-Polymerisat enthält, und

B) 95 bis 50 Gew.-% eines Vinylchlorid-Polymerisats mit einem K-Wert von 55 bis 65 besteht.

Vorzugsweise besteht die erfindungsgemäße Formmasse aus im wesentlichen 10 bis 30 Gew.-% der oben definierten Komponente A) und 90 bis 70 Gew.-% der oben definierten Komponente B). Das als Komponente A) eingesetzte hochmolekulare Vinylchlorid-Polymerisat innerhalb der erfindungsgemäßen Formmasse ist ein in an sich bekannter Weise in Gegenwart von vernetzenden Zusätzen hergestelltes Polymerisat des Vinylchlorids. Die Polymerisation erfolgt insbesondere nach dem Suspensionsverfahren in Gegenwart von 0,02 bis 2 Gew.-%, bezogen auf eingesetztes Vinylchlorid, an üblichen Suspensionsstabilisatoren, wie Polyvinylalkohol, Celluloseether oder Gelatine und in Gegenwart von öllöslichen Aktivatoren wie beispielsweise Diaryl- oder Dialkylperoxiden, Perestern oder Dialkylperoxydicarbonaten.

Als vernetzende Verbindungen werden Monomere eingesetzt, die mindestens zwei C-C-Doppelbindungen aufweisen wie Diallylphthalat, Maleinsäurediallylester, Triallyliso-cyanurat, Diallylether, Divinylverbindungen, Di- oder Triacrylsäureester. Die Menge des vernetzenden Mittels - auch Gemische sind einsetzbar - beträgt 0,05 bis 1 Gew.-%, bezogen auf eingesetztes Vinylchlorid, wobei in dem Fachmann bekannter Weise bei Variation der Menge innerhalb dieses Rahmens und auch in Abhängigkeit von der Aktivität des vernetzenden Mittels lösliche, hochmolekulare Produkte oder teilweise lösliche hochmolekulare Produkte, die unlösliche Anteile enthalten, gebildet werden.

Im Rahmen der erfindungsgemäßen Formmasse soll dieser unlösliche Anteil 0 bis 60 Gew.-%, vorzugsweise 0 bis 30 Gew.-%, und insbesondere 0 bis 10 Gew.-%, bezogen auf die gesamte Komponente A), betragen. Diese Bereiche schließen also solche Polymerisate ein, die nur aus löslichen Anteilen bestehen wie auch solche, die von (etwa) 0,1 Gew.-% bis zu der genannten Grenze, an unlöslichem Anteil enthalten.

Unter "unlöslich" beziehungsweise "löslich" soll im Sinne dieser Erfindung die Löslichkeit in Cyclohexanon verstanden werden. Die Begriffe gelten aber ebenso für andere konventionelle organische Lösungsmittel.

Der K-Wert der Komponente A) bestimmt an deren löslichem Anteil, soll >90, vorzugsweise > 95 sein, wobei Werte bis 150, vorzugsweise 120, insbesondere 105, erreicht werden können. Er wird bestimmt nach bzw. in Anlehnung an die DIN-Norm Nr. 53 726. Wegen der Anwesenheit von in Cyclohexanon unlöslichen Anteilen wird in Abänderung von DIN 53 726 mit einem Glasfiltertiegel (Porosität 3) filtriert und der unlösliche Anteil durch Trocknung und Wägung bestimmt. Anschließend wird die Viskosität der Lösung des gelösten Anteils bestimmt. Bei der Berechnung des K-Wertes (nach Fikentscher) wird als Konzentration die tatsächliche Konzentration der Meßlösung eingesetzt.

Die in der erfindungsgemäßen Formmasse enthaltene Komponente B) kann ein Vinylchlorid-Homopolymerisat sein, wie es nach den üblichen Masse- oder Suspensions-Polymerisationsverfahren erhalten wird. Sie kann aber auch ein Copolymerisat des Vinylchlorids sein, wobei dieses Copolymerisat von 0,5 bis 20 Gew.-%, vorzugsweise von 1 bis 15 Gew.-%, einpolymerisierte Einheiten mindestens eines mit Vinylchlorid copolymerisierbaren Comonomeren enthält. Solche Copolymerisate sind insbesondere Vinylchlorid/Vinylacetat, Vinylchlorid/Ethylen/Vinylacetat, Vinylchlorid/Acrylat oder Methacrylat, vorzugsweise mit bis zu 5 C-Atomen im veresterten Alkoholrest, sowie Vinylchlorid/Maleinimid. Auch Gemische von Vinylchlorid-Homopolymerisat mit mindestens einem solchen Copolymerisat oder von solchen Copolymerisaten untereinander können eingesetzt werden.

Der K-Wert dieser Komponente B) soll 55 bis 65, vorzugsweise 57 bis 61, betragen (gemessen nach DIN-Norm Nr. 53 726).

Dieser K-Wert wird in üblicher Weise durch Einhaltung der entsprechenden Temperatur bei der Polymerisation und/oder durch die Zugabe von Reglern eingestellt. Es werden die gleichen Aktivatoren, wie oben für A) beschrieben, verwendet.

Die erfindungsgemäße Formmasse kann außerdem die für die Extrusionsverarbeitung üblichen Additive beigemischt enthalten, wie insbesondere Schlagzäh-Modifier, Stabilisatoren, Gleitmittel, Antistatika, Füllstoffe, Pigmente und Farbmittel.

Schlagzäh-Modifier können den erfindungsgemäßen Formmassen in einer Menge von bis zu 20 Gewichtsteilen, vorzugsweise von 3 bis 15 Gewichtsteilen, zugesetzt werden. [diese Mengenangaben für die Additive beziehen sich hier wie im folgenden, jeweils auf 100 Gewichtsteile der erfindungsgemäßen Formmasse A) plus B)]. Dies sind beispielsweise Methylmethacrylat/Butadien/Styrol-, Acrylnitril/Butadien/Styrol-, Styrol/Acrylnitril-Polymerisate oder chloriertes Polyethylen. Gegebenenfalls können auch noch sogenannte Fließhilfsmittel wie beispielsweise niedermolekulares Polymethylmethacrylat beigemischt werden.

Als Wärme- bzw. Lichtstabilisatoren sind beispielsweise geeignet Mono- und Dialkyl-Zinnverbindungen mit 1 bis 10 C-Atomen im Alkylrest, bei denen die restlichen Wertigkeiten des Zinns über Sauerstoff und/oder Schwefelatome mit weiteren Substituenten verbunden sind; Aminocroton-säureester; α-Phenylindol; Salze der Erdalkalimetalle sowie des Zinks, Bariums, Cadmiums oder Bleis mit ali-phatischen Carbonsäuren oder Oxycarbonsäuren, gegebenen-falls gemeinsam mit alkylierten aromatischen Hydroxyverbindungen; basische und neutrale Bleisalze anorganischer Säuren wie Schwefel-, Phosphor- oder phosphoriger Säure. Die Stabilisatoren werden in Mengen von 0,5 bis 7 Gewichtsteilen, vorzugsweise von 1 bis 5 Gewichtsteilen, bezogen auf die Formmasse A) plus B), zugesetzt. Sie können auch in Mischungen untereinander sowie mit Antioxidantien wie alkylsubstituierten Hydroxylverbindungen, beispielsweise Di-tert.-butyl-para-cresol, Dibutyl-hydroxy-naphthalin, tert.-Butylhydroxyanisol, ferner Organophosphorigsäureestern, beispielsweise Tris-(mono- bzw. di-)nonylphenyl-phosphiten, eingesetzt werden. Zur Verbesserung der Lichtbeständigkeit können ferner den Mischungen gegebenenfalls ultraviolettes Licht absorbierende Substanzen wie Benzophenon- oder Benztriazol-Derivate einverleibt werden.

Als Gleitmittel kommen die folgenden Verbindungen in Betracht: höhere aliphatische Carbonsäuren oder Oxycarbonsäuren sowie deren Alkali- oder Erdalkalisalze, deren Ester und Amide, wie beispielsweise solche Derivate der Stearin- und Montansäure, Glycerinmonooleat, Bis-stearoyl-, Bis-palmitoyl-ethylendiamin, teilweise verseifte Montansäureester von Ethandiol und von 1,3-Butandiol. Gleitmittel werden den erfindungsgemäßen Formmassen in einer Menge von 0,1 bis 4 Gewichtsteilen, vorzugsweise von 0,5 bis 3 Gewichtsteilen pro 100 Gewichtsteile, zugegeben.

Ferner können die erfindungsgemäßen Formmassen enthalten: Additive mit antistatischer Wirkung wie übliche quaternäre Ammoniumsalze oder Emulgatoren, wie sie für die Emulsionspolymerisation von Vinylchlorid üblich sind, sowie ferner Füllstoffe, Pigmente und Farbmittel wie $TiO_2$, Kreide oder Silicate.

Schließlich können auch noch übliche Weichmacher in einer Menge bis zu 20 Gewichtsteilen auf 100 Gewichtsteile der erfindungsgemäßen Formmasse als Verarbeitungshilfsmittel zugegeben werden.

Die erfindungsgemäßen Formmassen werden aus den genannten Komponenten und Additiven mittels üblicher Mischungsoperationen hergestellt und nach den für Vinylchloridpolymerisate geläufigen Extrusionsverfahren verarbeitet. Die einzelnen Mischungskomponenten werden zunächst beispielsweise in einem üblichen Schnellmischer auf eine Mischungsendtemperatur von 120 °C gebracht und dann in einem Kühlmischer auf 20 °C abgekühlt. Die Extrusion zu Hohlkörpern erfolgt auf den für Polyvinylchlorid üblichen Blasformanlagen, zu Profilen auf üblichen Extrudern.

Die aus den erfindungsgemäßen Formmassen durch Extrusion erhaltenen Profile oder durch Blasextrusion erhaltenen Hohlkörper weisen eine dem Polyolefin außerordentlich ähnliche Oberflächenstruktur auf, das heißt, eine matte Oberfläche mit sehr feiner Rauhigkeit, die praktisch nicht glänzt. Diese Oberflächenstruktur wird im Rahmen dieser Erfindung als "Seidenmatt"-Effekt bezeichnet. Dies gibt sich bei Messungen zu erkennen durch einen kleinen Glanzwert in Kombination mit einer geringen Rauhtiefe.

Die Erfindung wird durch folgende Beispiele erläutert:

Die Formmassen der folgenden Beispiele und Vergleichsbeispiele werden dadurch hergestellt, daß in einem Henschel-Heiz-Kühlmischer, ausgelegt für eine Chargengröße von 25 kg, die jeweils angegebenen Rezepturbestandteile etwa 10 Minuten im Heizmischer intensiv vermischt werden, wobei eine Temperatur von 120 °C erreicht wird, und anschließend im Kühlmischer unter weiterem langsamem Umwälzen innerhalb von etwa 10 Minuten auf Raumtemperatur abgekühlt werden.

Beispiel 1

| | |
|---|---|
| Masse-Polyvinylchlorid vom K-Wert 58 | 75 Gew.-Teile |
| Suspensions-Polyvinylchlorid vom K-Wert 95 mit ausschließlich löslichen Anteilen | 25 Gew.-Teile |
| Schlagzäh-Modifier (Methylmethacrylat-Butadien-Styrol-Terpolymerisat) | 9 Gew.-Teile |
| Zinnstabilisator (Di-n-octylzinn-di-isooctylthioglykolat) | 1,5 Gew.-Teile |
| Montansäureester | 0,6 Gew.-Teile |
| Kombinationsgleitmittel Loxiol® GH4 (bestehend im wesentlichen aus gehärtetem Ricinusöl, gehärtetem Fettalkohol sowie anderen Tri- und Monoglyceriden) | 0,8 Gew.-Teile |
| Polymethylmethacrylat als Fließhilfsmittel | 1,0 Gew.-Teile |

Beispiel 2

| | |
|---|---|
| Masse-Polyvinylchlorid vom K-Wert 58 | 75 Gew.-Teile |
| Suspensions-Polyvinylchlorid vom K-Wert 98 mit einem in Cyclohexanon unlöslichen Anteil von 40 Gew.-% | 25 Gew.-Teile |
| Schlagzäh-Modifier (Methylmethacrylat-Butadien-Styrol-Terpolymerisat) | 9 Gew.-Teile |

| | |
|---|---|
| Zinnstabilisator (Di-n-octylzinn-di-isooctylthioglykolat) | 1,5 Gew.-Teile |
| Montansäureester | 0,6 Gew.-Teile |
| Kombinationsgleitmittel Loxiol® GH4 (bestehend im wesentlichen aus gehärtetem Ricinusöl, gehärtetem Fettalkohol sowie anderen Tri- und Monoglyceriden) | 0,8 Gew.-Teile |
| Polymethylmethacrylat als Fließhilfsmittel | 1,0 Gew.-Teile |

Beispiel 3

| | |
|---|---|
| Masse-Polyvinylchlorid vom K-Wert 58 | 75 Gew.-Teile |
| Suspensions-Polyvinylchlorid vom K-Wert 103 mit einem in Cyclohexanon unlöslichen Anteil von 55 Gew.-% | 25 Gew.-Teile |
| Schlagzäh-Modifier (Methylmethacrylat-Butadien-Styrol-Terpolymerisat) | 9 Gew.-Teile |
| Zinnstabilisator (Di-n-octylzinn-di-isooctylthioglykolat) | 1,5 Gew.-Teile |
| Montansäureester | 0,6 Gew.-Teile |
| Kombinationsgleitmittel Loxiol® GH4 (bestehend im wesentlichen aus gehärtetem Ricinusöl, gehärtetem Fettalkohol sowie anderen Tri- und Monoglyceriden) | 0,8 Gew.-Teile |
| Polymethylmethacrylat als Fließhilfsmittel | 1,0 Gew.-Teile |

Beispiel 4

| | |
|---|---|
| Masse-Polyvinylchlorid vom K-Wert 58 | 95 Gew.-Teile |
| Suspensions-Polyvinylchlorid vom K-Wert 95 mit ausschließlich löslichen Anteilen | 5 Gew.-Teile |
| Schlagzäh-Modifier (Methylmethacrylat-Butadien-Styrol-Terpolymerisat) | 9 Gew.-Teile |
| Zinnstabilisator (Di-n-octylzinn-di-isooctylthioglykolat) | 1,5 Gew.-Teile |

| Montansäureester | 0,6 Gew.-Teile |
| Kombinationsgleitmittel Loxiol® GH4 (bestehend im wesentlichen aus gehärtetem Ricinusöl, gehärtetem Fettalkohol sowie anderen Tri- und Monoglyceriden) | 0,8 Gew.-Teile |
| Polymethylmethacrylat als Fließhilfsmittel | 1,0 Gew.-Teile |

Beispiel 5

| Masse-Polyvinylchlorid vom K-Wert 58 | 70 | Gew.-Teile |
| Suspensions-Polyvinylchlorid vom K-Wert 95 mit ausschließlich löslichen Anteilen | 30 | Gew.-Teile |
| Schlagzäh-Modifier (Methylmethacrylat-Butadien-Styrol-Terpolymerisat) | 9 | Gew.-Teile |
| Zinnstabilisator (Di-n-octylzinn-di-isooctylthioglykolat) | 1,5 | Gew.-Teile |
| Montansäureester | 0,6 | Gew.-Teile |
| Kombinationsgleitmittel Loxiol® GH4 (bestehend im wesentlichen aus gehärtetem Ricinusöl, gehärtetem Fettalkohol sowie anderen Tri- und Monoglyceriden) | 0,8 | Gew.-Teile |
| Polymethylmethacrylat als Fließhilfsmittel | 1,0 | Gew.-Teile |

Vergleichsbeispiel 1 (in Anlehnung an DE-OS 25 20 229)

| Masse-Polyvinylchlorid vom K-Wert 58 | 75 | Gew.-Teile |
| Suspensions-Polyvinylchlorid vom K-Wert 70 | 25 | Gew.-Teile |
| Schlagzäh-Modifier (Methylmethacrylat-Butadien-Styrol-Terpolymerisat) | 10 | Gew.-Teile |
| Zinnstabilisator (Di-n-octylzinn-di-isooctylthioglykolat) | 1,5 | Gew.-Teile |
| gehärtetes Ricinusöl | 1,0 | Gew.-Teile |
| Montansäureester | 0,3 | Gew.-Teile |
| Polymethylmethacrylat als Fließhilfsmittel | 1,0 | Gew.-Teile |

Vergleichsbeispiel 2 (in Anlehnung an
DE-OS 27 16 853)

| | | |
|---|---|---|
| Masse-Polyvinylchlorid vom K-Wert 58 | 75 | Gew.-Teile |
| Suspensions-Polyvinylchlorid vom K-Wert 80 | 25 | Gew.-Teile |
| Schlagzäh-Modifier (Methylmethacrylat-Butadien-Styrol-Terpolymerisat) | 5 | Gew.-Teile |
| Zinnstabilisator (Di-n-octylzinn-di-isooctylthioglykolat) | 1,5 | Gew.-Teile |
| Bis-stearoylethylendiamin | 0,75 | Gew.-Teile |
| Polymethylmethacrylat als Fließhilfs-mittel | 0,6 | Gew.-Teile |

Vergleichsbeispiel 3

| | | |
|---|---|---|
| Masse-Polyvinylchlorid vom K-Wert 58 | 75 | Gew.-Teile |
| Suspensions-Polyvinylchlorid vom K-Wert 97 mit einem in Cyclohexanon unlöslichen Anteil von 85 Gew.-% | 25 | Gew.-Teile |
| Schlagzäh-Modifier (Methylmethacrylat-Butadien-Styrol-Terpolymerisat) | 9 | Gew.-Teile |
| Zinnstabilisator (Di-n-octylzinn-di-isooctylthioglykolat) | 1,5 | Gew.-Teile |
| Montansäureester | 0,6 | Gew.-Teile |
| Kombinationsgleitmittel Loxiol® GH4 (bestehend im wesentlichen aus gehärtetem Ricinusöl, gehärtetem Fettalkohol sowie anderen Tri- und Monogylceriden) | 0,8 | Gew.-Teile |
| Polymethylmethacrylat als Fließhilfs-mittel | 1,0 | Gew.-Teile |

Vergleichsbeispiel 4

| | | |
|---|---|---|
| Masse-Polyvinylchlorid vom K-Wert 58 | 95 | Gew.-Teile |
| Suspensions-Polyvinylchlorid vom K-Wert 97 mit einem in Cyclohexanon unlöslichen Anteil von 85 Gew.-% | 5 | Gew.-Teile |
| Schlagzäh-Modifier (Methylmethacrylat-Butadien-Styrol-Terpolymerisat) | 9 | Gew.-Teile |

| | | |
|---|---|---|
| Zinnstabilisator (Di-n-octylzinn-di-isooctylthioglykolat) | 1,5 | Gew.-Teile |
| Montansäureester | 0,6 | Gew.-Teile |
| Kombinationsgleitmittel Loxiol® GH4 (bestehend im wesentlichen aus gehärtetem Ricinusöl, gehärtetem Fettalkohol sowie anderen Tri- und Monoglyceriden) | 0,8 | Gew.-Teile |
| Polymethylmethacrylat als Fließhilfs-mittel | 1,0 | Gew.-Teile |

Vergleichsbeispiel 5

| | | |
|---|---|---|
| Masse-Polyvinylchlorid vom K-Wert 58 | 100 | Gew.-Teile |
| Schlagzäh-Modifier (Methylmethacrylat-Butadien-Styrol-Terpolymerisat) | 9 | Gew.-Teile |
| Zinnstabilisator (Di-n-octylzinn-di-isooctylthioglykolat) | 1,5 | Gew.-Teile |
| Montansäureester | 0,6 | Gew.-Teile |
| Kombinationsgleitmittel Loxiol® GH4 (bestehend im wesentlichen aus gehärtetem Ricinusöl, gehärtetem Fettalkohol sowie anderen Tri- und Monoglyceriden) | 0,8 | Gew.-Teile |
| Polymethylmethacrylat als Fließhilfs-mittel | 1,0 | Gew.-Teile |

Vergleichsbeispiel 6

| | | |
|---|---|---|
| Niederdruck-Polyethylen (Hostalen® GF 4760) | 100 | Gew.-Teile |

Die Mischungen aus den vorstehenden Beispielen und Vergleichsbeispielen werden unter folgenden Bedingungen zu Flaschen extrudiert:

Extruder: Extrusionsblasform-Anlage, Fabrikat Bekum, Typ S50/BA3, Schneckendurchmesser 50 mm, Schneckenlänge 20 · Durchmesser;

Blasform: 1,3-1-Flasche, zylindrisch, Flaschengewicht 60 g;

Extrudereinstellung: Schneckendrehzahl 30 U/min;

Temperaturprogramm: Zylinder: 140 °C, 155 °C, 160 °C; Kopf: 140 °C; Düse: 190 °C; Massetemperatur: 200 °C; Massedruck: 180 bar.

Die so hergestellten Flaschen werden folgenden Messungen unterzogen:

1. Es wird die Reflexion des einfallenden Lichts bei einem Einfallwinkel von 85 ° nach ASTM D 523-53T gemessen (Glanzwert).

2. Die Oberflächenrauhigkeit wird nach DIN-Norm 4768 in Form von Diagrammen unter Bestimmung des Mittelrauhwertes $R_a$ und der gemittelten Rauhtiefe $R_z$ bestimmt.

3. Progressiver Falltest zur Ermittlung der mittleren Fallhöhe, bei der 50 % der Flaschen noch unbeschädigt und die anderen 50 % gebrochen sind (nach Mallinger, Verpackungsrundschau 11, 1973, Seiten 1483 bis 1452). Prüftemperatur 20 °C.

4. Die Prüfung der Trübung erfolgt visuell: es bedeuten
   - keine Trübung
   + leicht getrübt
   ++ stark getrübt.

Die so ermittelten Werte sind in folgender Tabelle zusammengefaßt.

## Tabelle

| | Verhältnis Komponente A : B | K-Wert | unlösliche Anteile d. Komponente A [%] | Rauhtiefe $R_z/R_a$ [µm] | Glanzwert [%] | Trübung | mittlere Fallhöhe einer 1,3-1-Flasche [cm] |
|---|---|---|---|---|---|---|---|
| Beispiel 1 | 25/75 | 95 | 0 | 8,7 1,3 | 13 | ++ | 160 |
| Beispiel 2 | 25/75 | 98 | 40 | 10,8 1,7 | 23 | ++ | 150 |
| Beispiel 3 | 25/75 | 103 | 55 | 20,8 2,9 | 5 | ++ | 125 |
| Beispiel 4 | 5/95 | 95 | 0 | 16,0 2,6 | 40 | + | 145 |
| Beispiel 5 | 30/70 | 95 | 0 | 10,2 1,6 | 17 | ++ | 130 |
| Vergleichsbeispiel 1 | 25/75 | 70 | 0 | 7,6 1,2 | 76 | – | 120 |
| Vergleichsbeispiel 2 | 25/75 | 80 | 0 | 10,9 1,7 | 70 | – | 120 |
| Vergleichsbeispiel 3 | 25/75 | 97 | 85 | 38,8 4,2 | 3 | ++ | 20 |
| Vergleichsbeispiel 4 | 5/95 | 97 | 85 | 44,2 6,3 | 24 | ++ | 115 |
| Vergleichsbeispiel 5 | 0/100 | – | – | 1,1 0,22 | 90 | – | 120 |
| Vergleichsbeispiel 6 | – | – | – | 7,18 1,4 | 11 | ++ | – |

0104433

Patentansprüche

1. Formmasse für die Extrusion von Hohlkörpern und Profilen mit seidenmatter Oberfläche auf der Basis von Vinylchlorid-Polymerisaten und für deren Extrusionsverarbeitung üblichen Additiven, dadurch gekennzeichnet, daß das Vinylchlorid-Polymerisat im wesentlichen aus

A) 5 bis 50 Gew.-% eines hochmolekularen Vinylchlorid-Polymerisats mit einem K-Wert, bestimmt an seinem löslichen Anteil, von >90, welches seinerseits in einem Anteil von 0 bis 60 Gew.-%, bezogen auf Gesamtmenge A), ein vernetztes, unlösliches Vinylchlorid-Polymerisat enthält, und

B) 95 bis 50 Gew.-% eines Vinylchlorid-Polymerisats mit einem K-Wert von 55 bis 65

besteht.

2. Formmasse nach Anspruch 1, dadurch gekennzeichnet, daß das Vinylchlorid-Polymerisat im wesentlichen aus

A) 10 bis 30 Gew.-% eines hochmolekularen Vinylchlorid-Polymerisats mit einem K-Wert, bestimmt an seinem löslichen Anteil, von >90, welches seinerseits in einem Anteil von 0 bis 60 Gew.-%, bezogen auf Gesamtmenge A), ein vernetztes, unlösliches Vinylchlorid-Polymerisat enthält, und

B) 90 bis 70 Gew.-% eines Vinylchlorid-Polymerisats mit einem K-Wert von 55 bis 65

besteht.

3. Formmasse nach Anspruch 1 oder 2, dadurch gekennzeichnet, daß der K-Wert, bestimmt am löslichen Anteil, des Vinylchlorid-Polymerisats der Komponente A) >95 ist.

4. Formmasse nach einem oder mehreren der Ansprüche 1 bis 3, dadurch gekennzeichnet, daß das hochmolekulare Vinylchlorid-Polymerisat der Komponente A) ein vernetztes, unlösliches Vinylchlorid-Polymerisat in einem Anteil von 0 bis 30 Gew.-%, bezogen auf die Gesamtmenge von A), enthält.

5. Formmasse nach einem oder mehreren der Ansprüche 1 bis 4, dadurch gekennzeichnet, daß das Vinylchlorid-Polymerisat der Komponente B) einen K-Wert von 57 bis 61 besitzt.

6. Verwendung der Formmasse nach einem oder mehreren der Ansprüche 1 bis 5 zur Herstellung von Hohlkörpern mit seidenmatter Oberfläche nach dem Blasextrusions-Verfahren.

**0104433**

Nummer der Anmeldung

EP 83 10 8315

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | CH-A- 457 822 (SEMPERIT)<br>* Ansprüche, Unteransprüche *<br><br>--- | 1 | C 08 L 27/06 |
| D,A | DE-A-2 520 229 (DEUTSCHE SOLVAY)<br>* Anspruch 1 *<br><br>----- | 1 | |

**RECHERCHIERTE SACHGEBIETE (Int. Cl. 3)**

C 08 L

Der vorliegende Recherchenbericht wurde für alle Patentansprüche erstellt.

| Recherchenort<br>DEN HAAG | Abschlußdatum der Recherche<br>30-12-1983 | Prüfer<br>BOLETTI C.M. |
|---|---|---|